Europäisches Patentamt

European Patent Office

Office européen des brevets

(11) Veröffentlichungsnummer: **0 086 869**
**B1**

(19)

(12) # EUROPÄISCHE PATENTSCHRIFT

(45) Veröffentlichungstag der Patentschrift:
11.06.86

(51) Int. Cl.⁴: **B 29 C 67/20**

(21) Anmeldenummer: **82108209.6**

(22) Anmeldetag: **07.09.82**

(54) Verfahren zum Verarbeiten von Schaumthermoplastfolie.

(30) Priorität: 02.02.82 DE 3203368

(43) Veröffentlichungstag der Anmeldung:
31.08.83 Patentblatt 83/35

(45) Bekanntmachung des Hinweises auf die Patenterteilung:
11.06.86 Patentblatt 86/24

(84) Benannte Vertragsstaaten:
BE DE FR GB SE

(56) Entgegenhaltungen:
CH - A - 527 048
DE - A - 1 779 283
DE - A - 2 600 144
DE - B - 2 250 638
DE - B - 2 806 570
FR - A - 2 167 998
FR - A - 2 355 635
US - A - 3 183 291
US - A - 3 271 503
US - A - 3 312 383
US - A - 3 344 222
US - A - 3 673 033
US - A - 4 121 402

(73) Patentinhaber: Maschinenfabrik Rissen GmbH,
Marschweg 100, D-2000 Hamburg 56 (DE)

(72) Erfinder: Gröne, Horst-Ditmar, Klint 2,
D-2822 Schwanewede 2 (DE)
Erfinder: Leutnecker, Wolfram, Burgholzweg 116,
D-7400 Tübingen (DE)

(74) Vertreter: Glawe, Delfs, Moll & Partner Patentanwälte,
Postfach 26 01 62 Liebherrstrasse 20,
D-8000 München 26 (DE)

## Beschreibung

Die Erfindung betrifft ein Verfahren zum Herstellen von Becherbehältern aus Schaumthermoplastfolie in Form von Zuschnitten, bei dem die Folie nach dem Zusammenfalten des Behälters ausschließlich an Randbereichen und/oder Verbindungsstellen zur Formung des Behälters behandelt und/oder bearbeitet wird.

Es ist bekannt, Folie aus geschäumtem thermoplastischem Werkstoff wie Polystyrol zur Herstellung von wärmedämmenden Becherbehältern, die analog bekannten Papierbechern gestaltet und hergestellt sind, zu verwenden. Jedoch hat dieser Werkstoff einige von Karton stark abweichende Eigenschaften, die die Übernahme der bewährten Papierbecherherstellungsverfahren erschweren. Zu diesen Eigenschaften gehören eine geringere Reißdehnung, eine geringere Festigkeit, ein wesentlich geringerer Elastizitätsmodul und demzufolge größere Weichheit, ein stärkeres Rückbildungsvermögen nach Kaltverformung und schließlich eine wesentlich geringere Wärmeleitfähigkeit.

So ist es beispielsweise kaum möglich, an einen aus Schaumpolystyrolfolie bestehenden Becherrohling eine Mundrolle kalt anzubördeln. Das Material reißt bei der mit dem Bördelvorgang unvermeidlichen Dehnungsbeanspruchung und ist nicht in der Lage, die ihm beim Bördeln erteilte Gestalt zu halten; es bildet sich mehr oder weniger stark und im allgemeinen ungleichmäßig zurück, so daß die verbleibende Mundrolle ästhetisch nicht befriedigt und den Becherrand nicht hinreichend versteift. Eine Erwärmung des Bördelwerkzeugs bringt keine Verbesserung. Eine hinreichende Durchwärmung des Mundrollmaterials ist innerhalb der kurzen Taktzeit nur dann möglich, wenn das Werkzeug so warm ist, daß die Mundrolloberfläche infolge zu hoher Erweichung des Materials und eines Nachschäumens seiner Poren beschädigt wird. Hat das Werkzeug hingegen eine so niedrige Temperatur, daß die Materialoberfläche nicht beschädigt wird, so wird eine hinreichende Durchwärmung des Materials durch dessen geringe Leitfähigkeit verhindert.

Eine weitere Schwierigkeit im Zusammenhang mit der Mundrollbildung beruht darauf, daß das ohnehin verhältnismäßig dicke Material im Bereich der Mantelnaht aufgrund der dortigen Verdoppelung eine Dicke erreicht, die im Verhältnis zum Durchmesser der Mundrolle so groß ist, daß dadurch eine gleichmäßige Form der Mundrolle unmöglich gemacht wird.

Bei der Verarbeitung der Zuschnitte wirkt sich die im Vergleich mit Karton wesentlich stärkere elektrostatische Aufladung sehr unangenehm bei der Trennung der Zuschnitte aus.

Schließlich hat Schaumthermoplastfolie den Nachteil, daß sie bei zu starker Erwärmung zur Schrumpfung neigt.

Der Erfindung liegt die Aufgabe zugrunde, ein Verfahren der eingangs genannten Art zu schaffen, die diejenigen Probleme leichter zu beherrschen gestattet, die daher rühren, daß die Wärmeleitfähigkeit, die Reißfestigkeit, die Reißdehnung, der Elastizitätsmodul und die Formhaltigkeit des Materials sehr gering und seine Dicke verhältnismäßig groß sind.

Die erfindungsgemäße Lösung besteht darin, daß die Zuschnitte vor dem Zusammenfalten des Behälters an Teilen der Randbereiche und/oder Verbindungsstellen und in dem Bereich, der zur Bildung der Mundrolle bestimmt ist, auf größere Dichte und geringere Dicke verpreßt werden.

Es ist zwar bekannt (CH-A 527 048), Zuschnitte in Randbereichen, in denen die Mantelnaht gebildet werden soll, auf größere Dichte und geringere Dicke zu verpressen. Dadurch soll aber lediglich erreicht werden, daß der Zuschnitt mit einer Überlappung in diesem Bereich in eine verhältnismäßig enge Form eingeführt werden kann, deren Innenweite nicht viel größer ist als die Dicke des Zuschnitts. Anschließend wird der Zuschnitt durch Erwärmung teilweise aufgeschmolzen, was unter anderem zu der Mantelnahtverbindung durch Verschweißung führt. Die erwähnten Probleme wegen Wärmeleitfähigkeit, Reißfestigkeit, Reißdehnung, Elastizitätsmodul und Formhaltigkeit des Materials treten dabei nicht auf. Außerdem ist bei diesem Behälter eine Mundrolle nicht vorgesehen.

Es ist auch bekannt, bei Schaumstoff für Verpackungszwecke parallele Rillen in den Schaumstoff mit einem warmen Werkzeug einzupressen, was aufgrund von Zusammenpressung zu verstärkten Bereichen führt (FR-A 2 355 635). Hiermit soll aber nur eine Verstärkung des Verpackungsmaterials erreicht werden; Hinweise auf die besonderen Probleme bei der Herstellung von Becherbehältern vermag diese Entgegenhaltung nicht zu geben.

Durch die Pressung beim erfindungsgemäßen Verfahren wird erreicht, daß sich das Material gegenüber Wärmebehandlung während der Verarbeitung wesentlich gutmütiger verhält. Das liegt zum einen an der Erhöhung der Wärmeleitfähigkeit, die mit der Verringerung des Porenvolumens einhergeht. und zum anderen sinkt aber auch das Volumen speziell der Poren des Materials und damit der andernfalls mit der Erwärmung und Ausdehnung des in den Poren enthaltenen Gases verbundene Nachschäumeffekt im Oberflächenbereich; es können daher höhere Oberflächentemperaturen angewendet werden. Schließlich bewirkt die Dickenverringerung, daß die Wärme nicht so weit transportiert zu werden braucht und daß somit die erwünschte Durchwärmung des Materials rascher eintritt. Diese Effekte summieren sich so stark, daß in manchen Fällen schon eine geringfügige Dickenverringerung und Dichtevergrößerung eine entscheidende Änderung im Verhalten der Folie gegenüber Verarbeitungserwärmung hat. Beispielsweise wird es dank der Pressung möglich, Schaumpolystyrolfolie mit warmen Werkzeugen zu bördeln, wobei innerhalb der nach Bruchteilen von Sekunden bemessenen Behandlungszeit eine für die Formhaltigkeit der Mundrolle hinreichende Durchwärmung erzielt wird, ohne daß die Oberflächenqualität geschädigt wird.

Überraschenderweise hat die Pressung des Materials im Mundrollbereich auch noch einen stabilitätserhöhenden Effekt. Dies ist insofern überraschend, als die Dickenverringerung zunächst die Flexibilität der Folie erhöht, was damit zusammenhängt, daß der Biegewiderstand von der dritten Potenz der Dicke abhängt. Die Pressung hat aber neben der Dickenverringerung auch den Effekt einer Erhörung des Elastizitätsmoduls. Während dieser für die Steifigkeit der Mundrolle entscheidend ist, wirkt sich die Dickenverminderung der Folie und deren Flexibilitätserhöhung auf die Festigkeit der Mundrolle nicht aus, weil deren für den Biegewiderstand entscheidende Querabmessung nicht von der Foliendicke, sondern vom Mundrolldurchmesser gebildet wird.

Diese Erscheinung kann auch an anderen Stellen eines aus Schaumthermoplastfolie hergestellten Artikels benutzt werden, beispielsweise bei einem Becherbehälter an der Bodenkante.

Schließlich ist bei der Herstellung von Becherbehältern auch die Pressung des Zuschnittmaterials im Bereich der späteren Mantelnaht vorteilhaft. Zum einen wird dadurch die Verschweißung der Mantelnaht erleichtert. Zum anderen wird im Bereich der Mundrolle die Gesamtdicke der Mantelnaht verringert, und zwar zweckmäßigerweise auf eine Dicke, die etwa der Dicke des übrigen Materials im Bereich der Mundrolle entpsricht, so daß die Mundrollbildung und Mundrollgestalt nicht durch stellenweise größere Materialdicke in Mitleidenschaft gezogen wird. Schließlich hat die Pressung des Materials im Bereich der Mantelnaht den besonderen Vorteil, daß die sonstige Opazität des Werkstoffs durch die Verringerung des Porenanteils verringert wird, d.h. das Material wird durchsichtiger, so daß eine Füllstandskontrolle ermöglicht wird. Die Pressung wird daher zweckmäßigerweise so gelenkt, daß der gewünschte Grad von Durchsichtigkeit erreicht wird. Eine etwaige Füllmarke bringt man nach der Erfindung zweckmäßigerweise an der Mantelnaht an, d.h. auf oder neben dieser.

Obwohl die Mantelnaht nach der vorangegangenen Pressung auch durch ein Schweißverfahren geschlossen werden könnte, das den Wärmetransport durch die Folie hindurch zur Voraussetzung hat, ist es im Rahmen der Erfindung zweckmäßiger, die Verschweißung der Mantelnaht mit Ultraschall vorzunehmen. Wie bekannt, wird das Material beim Ultraschall-Schweißen nur im Bereich der aufeinanderliegenden Nahtflächen heiß, während der übrige Materialquerschnitt kühl bleibt. Das hat bei der Herstellung von Becherbehältern nicht nur den Vorteil, daß das Material durch die kühl bleibenden Querschnitte an einer Schrumpfung in der Folienebene aufgrund eingefrorener Spannung gehindert wird, sondern daß auch die Materialdicke während des Schweißvorgangs leicht gesteuert, sozusagen kalibriert werden kann, ohne daß sich die Werkstoffoberfläche dabei verändert.

Die Pressung des Zuschnittmaterials erfolgt zweckmäßigerweise, wenn dies noch herstellungsweich ist. Den weichen Zustand hat es zunächst aufgrund erhöhter Temperatur. Wird es in diesem Zustand gepreßt, so können die Porenwände leicht miteinander verschweißen, so daß die Poren mehr oder weniger ganz verschwinden. Aber auch nach Abkühlung ist es zunächst noch weich, wenn - wie üblich - ein Treibmittel (beispielsweise Pentan) verwendet wird, das weichmacherartig wirkt. Dieser Weichheitszustand verliert sich erst, wenn das Treibmittel aus den Poren herausdiffundiert und durch Luft ersetzt ist. Im allgemeinen ist es zweckmäßiger, die Pressung des Materials nach der Abkühlung in dem durch das Treibmittel verursachten Weichheitszustand vorzunehmen, weil es dann leichter ist, die gewünschte Dichte und Dicke durch die Stärke der Pressung einzustellen. Eine Verschweißung der Porenwände findet dabei nicht oder in geringerem Maße statt, so daß das Aussehen des Materials sich nicht so stark ändert.

Wie oben ausgeführt wurde, hat die Pressung neben der Dickenverringerung auch den Effekt einer Erhöhung des Elastizitätsmoduls, und zwar wird diese Erhöhung vornehmlich in Richtung der Folienebene wirksam, weil infolge der Abflachung der Porengestalt die Porenwände nach der Pressung überwiegend in Richtung der Folienebene verlaufen. Dieser Effekt kann unerwünscht sein, wenn der gepreßte Zuschnittbereich gebogen werden soll. Nach der Erfindung kann er dadurch ausgeschaltet oder verringert werden, daß der gepreßte Bereich vor dem Biegevorgang auf der dem Biegezentrum zugewendeten Seite stellenweise mit schmalen Einprägungen versehen wird, die vorzugsweise überwiegend etwa in Richtung der Biegeachse verlaufen, also quer zu derjenigen Richtung, in welcher auf der der Biegeachse zugewandten Seite des Zuschnitts eine Kompression des Materials durch die Biegung stattfindet. Die Einprägungen heben die Versteifung des Materials in dieser Richtung auf, so daß es der Zusammenpressung geringeren Widerstand entgegensetzt. Die Einprägungen können - wie dies bei Falzlinien bei der Kartonverarbeitung an sich bekannt ist-linienförmig sein. Jedoch ist es auch denkbar, daß die Einprägungen in Richtung der Biegeachse nicht langgestreckt, sondern nur länglich oder gar kurz sind, wobei der gewunschte Effekt durch die Vielzahl solcher Einprägungen gewährleistet wird. Zweckmäßigerweise werden die Einprägungen in der noch herstellungsweichen Folie geformt, und zwar vorzugsweise gleichzeitig mit der Pressung des Materials. Besonders bewährt hat sich diese Maßnahme im Bereich der Mundrolle eines Becherbehälters. Dabei sollen die schmalen, länglich oder langgestreckten Einprägungen eine überwiegende Richtungskomponente in Becherumfangsrichtung aufweisen. Die Becherumfangsrichtung stimmt dabei mit der Richtung der Biegeachse überein.

Die notwendige Tiefe der Einprägung ist leicht durch Versuch von Fall zu Fall zu ermitteln. In der praktischen Ausführung hat sich eine Tiefe von etwa ein bis drei Vierteln der Dicke des den Einprägungen unmittelbar benachbarten Zuschnittmaterials bewährt, wobei diese Tiefe im Verhältnis zur Materialdicke um so größer sein soll, je stärker das Material gepreßt ist. Zweckmäßigerweise haben die Einprägungen im Querschnitt keilförmige Gestalt.

Die Erfindung wird im folgenden näher unter Bezugnahme auf die Zeichnung erläutert, die vorteilhafte Ausführungsbeispiele veranschaulicht. Darin zeigen:

Fig. 1 eine Folienbahn mit darin angeordneten Zuschnitten,

Fig. 2 eine vergrößerte Schnittdarstellung durch den gepreßten Rand eines Zuschnitts,

Fig. 3 einen vergrößerten Querschnitt durch einen Stapel von am Rand gepreßten Zuschnitten,

Fig. 4 einen Becherbehälter,

Fig. 5 einen vergrößerten Querschnitt durch den Mundrollrand des Becherbehälters,

Fig. 6 einen Längsschnitt durch eine Vorrichtung zur Herstellung der Mundrolle,

Fig. 7 einen vergrößerten Querschnitt durch die Mundrolle eines Becherbehälters mit innenseitigen Einprägungen,

Fig. 8 einen vergrößerten Querschnitt durch den zur Bildung der Mundrolle vorgesehenen Bereich eines Zuschnitts,

Fig. 9 eine Teilansicht eines Zuschnitts in Blickrichtung IX der Fig. 8 in etwa natürlichem Maßstab,

Fig. 10 eine schematische Schnittdarstellung einer Preß- und Prägeeinrichtung und

Fig. 11 die schematische Ansicht einer Maschine zum Herstellen der Folie und der Zuschnitte.

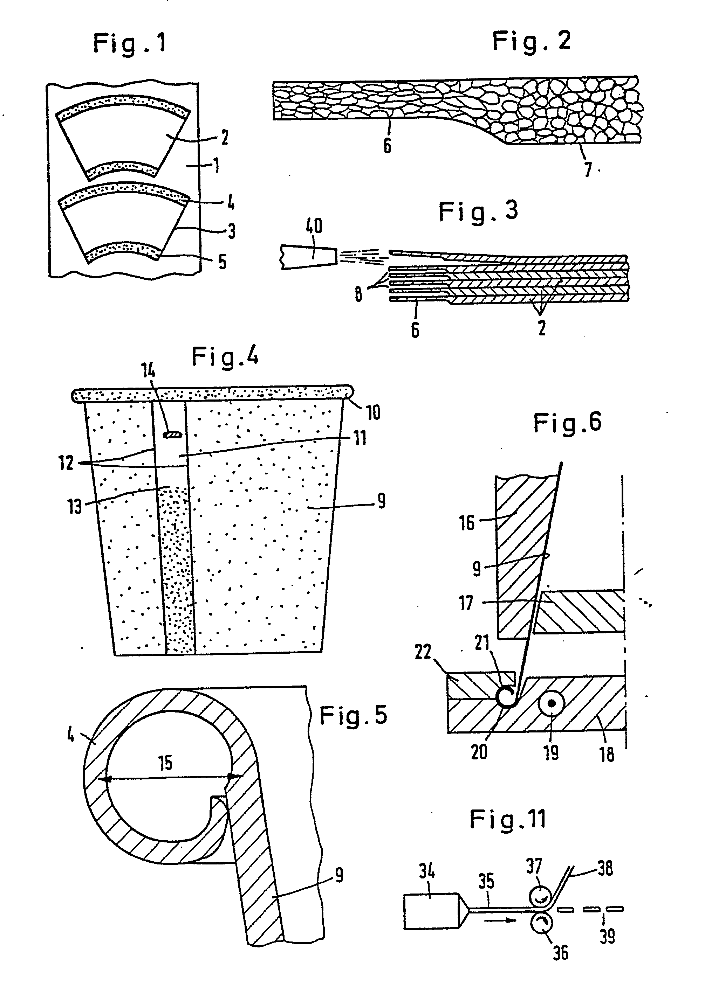

Gemäß Fig. 1 sind auf der Bahn 1 aus geschäumtem Polystyrol von beispielsweise 0,8 mm Dicke die Zuschnitte 2 für Mäntel von Becherbehältern aufgezeichnet. Darin stellen die durchgezogenen Linien 3 die Schnittlinien dar, während die gepunkteten Flächen 4, 5 die gepreßten Bereiche veranschaulichen. Man hat sich vorzustellen, daß die Folienbahn 1 soeben aus der Herstellungsmaschine heraustritt. Sie ist zwar schon auf beispielsweise 30° bis 50° abgekühlt; jedoch ist sie noch weich infolge des weichmacherartig wirkenden Treibmittelgehalts. Mit leichtem Fingerdruck läßt sie sich auf eine geringere Dicke zusammendrücken. In den Flächenbereichen 4 und 5 geschieht dies mittels geeignet geformter Stempel, deren Preßkraft durch einstellbare Federn bestimmt wird, so daß beliebige Preßgrade und damit beliebige Dicken und Dichten der gepreßten Bereiche eingestellt werden können. In der Zeichnung ist vorgesehen, daß der Preßbereich 4 entlang dem der Mundrolle zugeordneten Rand des Zuschnitts verläuft, während der Preßbereich 5 entlang der Bodenkante des Mantels verläuft. Entlang den geraden Schnittkanten, die der Mantelnaht zugeordnet sind, können ebenfalls entsprechende Preßbereiche vorgesehen sein. Wenn die Schneidwerkzeuge mit den Preßwerkzeugen verbunden sind, kann die Pressung gleichzeitig mit dem Ausschneiden der Zuschnitte erfolgen. Jedoch können diese beiden Vorgänge zeitlich und vorrichtungsmäßig auch getrennt werden.

Fig. 2 veranschaulicht die Struktur eines gepreßten Bereichs 6 im Vergleich mit der ungepreßten Struktur 7, wobei die netzartigen Striche innerhalb der Querschnittsbegrenzung die Porenwandungen veranschaulichen sollen. Man erkennt, daß die Porenwandungen im gepreßten Bereich 6 eine wesentlich ausgeprägtere Vorzugsrichtung in der Folienebene haben als diejenigen im ungepreßten Bereich. Daraus resultiert, daß der gepreßte Bereich einer Verformung in Richtung der Folienebene größeren Widerstand entgegensetzt. Mit anderen Worten ist der Elastizitätsmodul des gepreßten Bereichs größer als derjenige im ungepreßten Bereich.

Auch das Wärmeleitvermögen ist höher, weil die Porenausdehnung quer zur Folienebene und damit in Richtung des Wärmetransports geringer ist. Da außerdem die Dicke des gepreßten Bereichs geringer ist, wird dieser schneller durchwärmt. Die oberflächennahen Poren haben ein geringeres Volumen als im ungepreßten Bereich. Ihre absolute Volumenvergrößerung unter der direkten Einwirkung eines heißen Werkzeugs ist daher geringer als diejenige der Poren im ungepreßten Bereich. Daher kommt es, daß das gepreßte Material unter der Einwirkung heißer Werkzeuge, wie sie beispielsweise zum Schweißen oder zum Prägen eingesetzt werden, weniger stark zum sogenannten Nachschäumen, d.h. zum Aufblähen der Oberflächenporen und damit zu einer Aufrauhung der Oberfläche neigt als das ungepreßte Material.

In Fig. 3 erkennt man einen Stapel von Zuschnitten 2, deren Ränder 6 durch Prägung dünner gemacht sind, so daß dazwischen offene Spalten 8 entstehen. Ein zum Zweck der Trennung der Zuschnitte auf die Zuschnittkanten gerichteter Blasstrahl aus einer Düse 40 vermag in diese Spalten leicht einzudringen und damit die Vereinzelung der Zuschnitte selbst dann zu bewirken, wenn sie elektrostatisch aneinander haften.

In Fig. 4 ist ein aus Schaumpolystyrolfolie hergestellter Becherbehälter mit einem Mantel 9 dargestellt, an dessen oberem Rand eine Mundrolle 10 gebildet ist und dessen Längsränder im Bereich der Mantelnaht 11 miteinander verschweißt sind. Die Linien 12 bezeichnen die (in der Praxis als solche nicht in Erscheinung tretenden) Grenzen des Schweißbereichs. Während das Folienmaterial im allgemeinen undurchsichtig ist, wie durch eine leichte Punktierung angedeutet wurde, ist es im Bereich der Schweißnaht 11 durchsichtiger. Dies ist in der Zeichnung oben durch fehlende Punktierung angedeutet, während unten durch stärkere Punktierung das dunkle Durchscheinen einer Becherfüllung dargestellt ist, deren Füllstand 13 leicht mit der bei 14 vorgesehenen Füllmarke verglichen werden kann. Die Füllmarke kann leicht gleichzeitig mit dem Schweißen der Mantelnaht 11 aufgebracht werden. Dies hat gegenüber dem üblichen Aufdrucken einer Füllmarke den Vorteil erheblich größerer Genauigkeit.

In der Darstellung der Mundrolle in Fig. 5 erkennt man, daß das Material 4 der Mundrolle gegenüber dem Material 9 des sonstigen Mantels durch Pressung dünner ist. Nicht oder nicht wesentlich dicker ist das Mundrollmaterial auch im Bereich des in die Mundrolle hineinragenden Endes der Mantelnaht 11, so daß sich nicht durch unterschiedliche Materialdicke Schwierigkeiten bei der Bildung der Mundrolle ergeben können. Dank der geringeren Dicke des Mundrollmaterials läßt es sich leichter unter Wärmeeinfluß formen, wobei der Wärmeeinfluß das Material so weit durchdringt, daß die Mundrolle die ihr erteilte Gestalt beibehalten kann. Obwohl das Mundrollmaterial dünner und daher an sich flexibler ist, wird die Steifigkeit der Mundrolle durch die Pressung vergrößert. Während nämlich die für die Steifigkeit der Mundrolle maßgebende Abmessung, der Durchmesser 15, unverändert geblieben ist, hat sich der Elastizitätsmodul des Mundrollmaterials durch die Pressung erhöht.

In Fig. 6 erkennt man den Mantel 9 des Becherbehälters, der in einer Greiferglocke 16 durch einen Innenkeil 17 axial festgehalten wird. Dem so gehaltenen Becher steht koaxial das Bördelwerkzeug 18 gegenüber, das durch Heizelemente 19 beheizt wird und bei 20 eine Bördelfläche bildet, die in der Art einer geschlossenen Form von der Bördelfläche 21 eines Rings 22 fortgesetzt wird. Werden die Becherhalterung 16, 17 und das Bördelwerkzeug 18, 22 koaxial aufeinander zu bewegt, so tritt der zunächst noch ungebördelte Rand des Bechermantels 9 in den von den Flächen 20, 21 gebildeten Formraum 1, wobei er durch den Kontakt mit dem Bördelwerkzeug 18 erwärmt wird und daher der Krümmung der Bördelflächen willig folgen kann und in der ihm erteilten Gestalt verbleibt, nachdem der Bördelvorgang abgeschlossen ist.

Der für den jeweiligen Zweck beste Grad der Folienpressung läßt sich durch Versuch leicht ermitteln. Z.B. hat es sich als zweckmäßig erwiesen, den für die Mundrolle vorgesehenen Mantelrand auf etwa 25 % der ursprünglichen Dicke im kalten aber noch weichen Zustand der Folie zusammenzupressen. Zwar geht die Foliendicke anschließend wieder etwas auf, bleibt aber weit unter der ursprünglichen Foliendicke, nämlich bei etwa 50 %. Will man eine stärkere bleibende Dichtenvergrößerung erzielen, muß man entweder einen stärkeren Preßdruck anwenden oder die Pressung bei höherer Temperatur der Folie vornehmen.

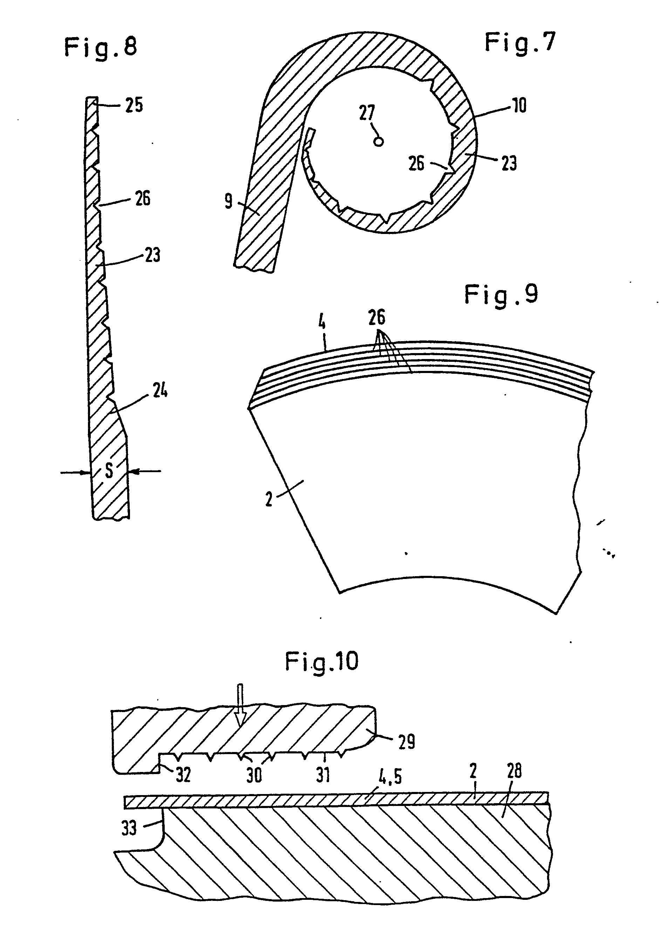

Wie man in Fig. 2 erkennt, werden die Poren in dem gepreßten Bereich 6 so zusammengedrückt, daß die Porenwände zumindest auf derjenigen Seite, von der die Pressung kommt, überwiegend in der Folienebene ausgerichtet sind. Dadurch tritt eine Vergrößerung des Elastizitätsmoduls und eine Versteifung gegenüber Zug- und Druckkräften auf. Bei Biegung, insbesondere im Mundrollbereich eines Becherbehälters, kann dies unerwünscht sein. So erkennt man bei der Betrachtung der Fig. 7, daß das Material 23 der Mundrolle 10 im Innenbereich durch die Biegung zusammengepreßt, im Außenbereich hingegen gedehnt ist. Erfindungsgemäß wird diese Verformung dadurch erleichtert, daß eine Mehrzahl von Einprägungen 26 auf der Innenseite der Mundrolle vorgenommen worden sind, also auf derjenigen Seite des Materials, die dem Biegezentrum 27 zugewendet ist und die daher durch die Biegung unter Druckspannung gesetzt wird. Der durch die Zellwände der Druckverformung entgegengesetzte Widerstand wird durch die Einprägungen unterbrochen.

Damit dies auf der gesamten Umfangslänge der Mundrolle gleichmäßig geschieht, haben die Einprägungen in dem dargestellten Beispiel linienförmige Gestalt. Die Prägelinien erkennt man ohne weiteres in Fig. 9. Sie verlaufen in Umfangsrichtung, d.h. parallel zur Biegeachse 27. Geringfügige Abweichungen von dieser Richtung stören den Effekt nicht.

Fig. 8 veranschaulicht die Vorbereitung des Zuschnittmaterials für die Bildung der Mundrolle. Während das Zuschnittmaterial ansonsten und ursprünglich auch im Mundrollbereich die Dicke S aufweist, ist das Material 23 in dem zur Bildung der Mundrolle bestimmten Bereich zwischen den Punkten 24 und 25 zusammengepreßt, und zwar in der Dicke abnehmend von 2/3 S beim Punkt 24 bis etwa 1/3 S am Zuschnittrand bei 25. Acht Einprägungen sind über die Breite des gepreßten Streifens mit senkrecht zur Zeichenebene verlaufender Längsrichtung eingeformt, deren Tiefe etwa gleich ist, nämlich zwischen 0,2 und 0,3 S liegt, so daß das Verhältnis von der Einprägungstiefe zur Werkstoffdicke vom Punkt 24 bis zum Punkt 25 zunimmt. Die Zunahme dieses Verhältnisses entspricht auch der Zunahme der Dichte des Materials. Je stärker das Material zusammengepreßt ist und je dichter es demzufolge ist, um so tiefer soll im Verhältnis zur Materialdicke auch die Einprägung sein.

Die Einprägungen haben, wie aus Fig. 8 ersichtlich, eine vom Einprägungsgrund bis zur Werkstoffoberfläche sich erweiternde Querschnittsgestalt.

Fig. 10 veranschaulicht das Prinzip einer für die Pressung und die Einprägungen geeigneten Maschine. Der Zuschnitt 2, dessen Randbereich 4, 5 gepreßt, geprägt und beschnitten werden soll, liegt auf der feststehenden Platte 28. Über dieser ist die in Pfeilrichtung bewegliche Platte 29 angeordnet, deren Preßfläche 31 eine Mehrzahl von senkrecht zur Zeichenebene verlaufender Rippen 30 trägt, die zur Formung der Vertiefungen 26 vorgesehen sind. Die Bewegung der Platte 29 im Verhältnis zur feststehenden Platte 28 ist so gesteuert, daß sich die gewünschte Zusammenpressung und Einprägung des Bereichs 4,5 des Zuschnitts 2 ergibt. Dabei wird der überstehende Rand des Zuschnitts durch die zusammenwirkenden Schneidkanten 32, 33 der Platten abgeschnitten.

Während Fig. 10 unterstellt, daß die Platte 29 Teil eines hin- und hergehend bewegten Stempels sei, ist auch vorstellbar, daß die beschriebenen Werkzeugteile an einem umlaufenden Walzenpaar angeordnet sind, wie dies in Fig. 11 vorausgesetzt ist. Dort erkennt man eine Maschine 34 zum Erzeugen eines quasi endlosen Strangs 35 von geschäumter Thermoplastfolie, die sich beim Erreichen des Walzenpaars 36, 37 im noch herstellungsweichen Zustand befindet. Die Oberfläche der Walze 37 trägt die unter Bezugnahme auf Fig. 10 erläuterte Preßfläche 31, Prägevorsprünge 30 und Schneidkante 32, während die Walze 36 als Gegenmatrize dient. Aus dem Walzenspalt treten der Rest der Folie 38 sowie die geschnittenen, gepreßten und geprägten Zuschnitte 39 aus.

## Patentansprüche

1. Verfahren zum Herstellen von Becherbehältern aus Schaumthermoplastfolie in Form von Zuschnitten, bei dem die Folie nach dem Zusammenfalten des Behälters ausschließlich an Randbereichen und/oder Verbindungsstellen zur Formung des Behälters behandelt und/oder bearbeitet wird, dadurch gekennzeichnet, daß die Zuschnitte vor dem Zusammenfalten des Behälters an Teilen der Randbereiche und/oder Verbindungsstellen, und in dem Bereich, der zur Bildung der Mundrolle bestimmt ist, auf größere Dichte und geringere Dicke verpreßt werden.

2. Verfahren nach Anspruch 1, dadurch gekennzeichnet, daß die Pressung an der noch herstellungsweichen Folie durchgeführt wird.

3. Verfahren nach Anspruch 1 oder 2, dadurch gekennzeichnet, daß die Pressung in demselben Arbeitsschritt mit dem Ausschneiden der Zuschnitte erfolgt.

4. Verfahren nach einem der Ansprüche 1 bis 3, dadurch gekennzeichnet, daß die Mundrolle unter oder nach Kontakterwärmung geformt wird.

5. Verfahren nach einem der Ansprüche 1 bis 4, bei dem der gepreßte Zuschnittbereich unter Biegung verformt wird, dadurch gekennzeichnet, daß der zur Bildung der Mundrolle bestimmte Bereich vor dem Biegevorgang auf der dem Biegezentrum zugewendeten Seite stellenweise mit schmalen Einprägungen versehen wird.

6. Verfahren nach Anspruch 5, dadurch gekennzeichnet, daß die Einprägungen etwa in Richtung der Biegeachse verlaufen.

7. Verfahren nach Anspruch 5 oder 6, dadurch gekennzeichnet, daß die Einprägungen in der noch herstellungsweichen Folie geformt werden.

8. Verfahren nach einem der Ansprüche 5 bis 7, dadurch gekennzeichnet, daß die Einprägungen gleichzeitig mit der Pressung geformt werden.

## Claims

1. A method of making cup-type containers comprising foamed thermoplastic sheet in the form of blanks, wherein after the folding together of the container the sheet is treated and/or worked exclusively at edge zone; and/or joints so as to form the container, characterised in that, prior to the folding together of the container, the blanks are pressed to a greater density and a lesser thickness at parts of the edge zones and/or joints and in the zone which is intended to form the rolled rim.

2. A method according to Claim 1, characterised in that the pressing is carried out on the sheet whilst the formed sheet is still in a soft state.

3. A method according to Claim 1 or 2, characterised in that the pressing takes places in the same operating step as the cutting out of the blanks. ·

4. A method according to any of Claims 1 to 3, characterised in that the rolled rim is formed during or after contact heating.

5. A method according to any of Claims 1 to 4, wherein said pressed blank zone is deformed during bending, characterised in that, prior to the bending operation and on the side nearest the bending centre, the zone intended to form the rolled rim is provided at intervals with narrow indentations.

6. A method according to Claim 5, characterised in that the indentations extend substantially in the direction of the bending axis.

7. A method according to Claim 5 or 6, characterised in that the indentations are formed in the sheet whilst it is still in a soft state.

8. A method according to any of Claims 5 to 7, characterised in that the indentations are formed simultaneously with the pressing.

## Revendications

1. Procédé pour la fabrication de récipients-gobelets à partir de feuille de mousse thermoplastique sous forme de flans découpés, la feuille étant traitée et/ou travaillée, après le pliage du récipient, exclusivement au niveau de régions bordantes et/ou de points d'assemblage pour le façonnage du récipient, caractérisé en ce qu'avant le pliage du récipient, les flans découpés sont pressés à une plus forte densité et à une moindre épaisseur au niveau de parties des régions bordantes et/ou des points d'assemblage et dans la région qui est destinée à la formation du bourrelet enroulé d'embouchure.

2. Procédé selon la revendication 1, caractérisé en ce que le pressage est effectué sur la feuille encore dans l'état ramolli de fabrication.

3. Procédé selon la revendication 1 ou 2, caractérisé en ce que le pressage est effectué dans le même temps de travail que le découpage des flans.

4. Procédé selon l'une quelconque des revendications 1 à 3, caractérisé en ce que le bourrelet enroulé d'embouchure est formé sous ou après réchauffement par contact.

5. Procédé selon l'une quelconque des revendications 1 à 4, dans lequel la région pressée du flan est façonnée par courbage, caractérisé en ce qu'avant l'opération de courbage, la région destinée à former le bourrelet enroulé d'embouchure est munie, par endroits, d'empreintes étroites sur la face dirigée vers le centre de courbure.

6. Procédé selon la revendication 5, caractérisé en ce que les empreintes s'étendent à peu près dans la direction de l'axe de courbage.

7. Procédé selon la revendication 5 ou 6, caractérisé en ce que les empreintes sont formées dans la feuille encore dans l'état ramolli de fabrication.

8. Procédé selon l'une quelconque des revendications 5 à 7, caractérisé en ce que les empreintes sont formées en même temps que le pressage.

Fig.1

Fig.2

Fig.3

Fig.4

Fig.6

Fig.5

Fig.11

Fig.8

Fig.7

Fig.9

Fig.10